# EUROPEAN PATENT APPLICATION

(11) **EP 1 727 019 A1**
(43) Date of publication of application: **29.11.2006**
(21) Application number: 05253286.8
(22) Date of filing: 27.05.2005
(51) Int. Cl.: G06F 1/16, B60R 11/02

(54) **In-car video/audio computer module**

(71) Applicant: Mitac Technology Corp., Hsin-Chu, Hsien (TW)
(72) Inventor: Liu, Chen-Chao, Hsinchu County Taiwan, R.O.C. (TW)
(74) Representative: Dearing-Lambert, Peter Richard

(57) **Abstract**

An in-car video/audio computer module (100) includes a casing (11) removably received in a receiving slot (21) defined inside a car. A touch-control type display screen is mounted to a front end of the casing (11) so that the display screen (12) is exposed to a viewer when the casing (11) is received in the receiving slot (21). A rotatable joint (3) is formed between the display screen (12) and the casing (11) to allow for adjustment of angular position of the screen (12) with respect to the viewer. Mateable connectors (51, 52) are provided between the casing (11) and the receiving slot (21) to establish electrical connection therebetween. The computer module (100) can be removed from the receiving slot (21) to serve as a standing-along portable computer.

## Description

### FIELD OF THE INVENTION

The present invention relates generally to a video/audio computer device, and in particular to a video/audio computer module that can be integrated with control circuit of an automobile.

### BACKGROUND OF THE INVENTION

With the development of computer technology and digitalized multi-medium technology, computer devices are widely used in a variety of applications, such as office applications, home entertainments, and business operations. Some of the latest developments successfully combine multi-medium or digital music features in portable computer devices, such as notebook computer and thus allowing general consumers to watch multi-medium films or to listen to digital music with the notebook computers.

The automobiles are also provided with excellent audio stereo system, or even a video system, which allows the driver or passengers of a car to enjoy excellent audio entertainments. Most of the currently available car stereo systems are formed as a removable module that fits into a receiving slot formed inside the car. However, such stereo systems do not provide functions other than music play back.

In addition, the conventional car stereo systems are designed as part of the car circuit. Thus, when the stereo system is removed from the receiving slot, it does not function at all. In other words, the car stereo systems cannot serve as a standing along device.

Thus, the present invention is aimed to provide a video/audio device for in-car use, which overcomes the above-discussed problems.

### SUMMARY OF THE INVENTION

An objective of the present invention is to provide an in-car video/audio computer module, which can be integrated with a car stereo system to serve as a multi-media playback device.

Another objective of the present invention is to provide an in-car video/audio computer module, which features both playback of multi-media signals and computation performed by a regular computer.

A further objective of the present invention is to provide an in-car video/audio computer module, which, besides being integrateable with a car stereo system to serve as a multi-media device, can serve as an independent port computer, when detached from the car.

To achieve the above objectives, in accordance with the present invention, an in-car video/audio computer module comprises a casing removably received in a receiving slot defined inside a car. A touch-control type display screen is mounted to a front end of the casing so that the display screen is exposed to a viewer when the casing is received in the receiving slot. A rotatable joint is formed between the display screen and the casing to allow for adjustment of angular position of the screen with respect to the viewer. Mateable connectors are provided between the casing and the receiving slot to establish electrical connection therebetween. The computer module can be removed from the receiving slot to serve as a standing-along portable computer.

The present invention provides an in-car video/audio computer module comprising a built-in video/audio device, which when the computer module is received in a receiving slot of a car is integrated with a stereo system of the car. In addition, a satellite navigation system of the car can be connected to the computer module to enhance the operation thereof. Further, when the computer module is removed from the receiving slot, the computer module can serve as an independent portable computer, which enhances the operability of the device.

### BRIEF DESCRIPTION OF THE DRAWINGS

The present invention will be apparent to those skilled in the art by reading the following description of a preferred embodiment thereof, with reference to the attached drawings, in which:
Figure 1 is a perspective view showing a portion of interior of an automobile defining a receiving slot to receive and retain an in-car video/audio computer module in accordance with the present invention;
Figure 2 is similar to Figure 1 but showing the in-car video/audio computer module detached from the receiving slot of the automobile;
Figure 3 is a perspective view of the in-car video/audio computer module in accordance with the present invention;
Figure 4 is another perspective view of the in-car video/audio computer module of the present invention, illustrating rotation of a display screen of the computer module;
Figure 5 is a schematic view illustrating the engagement between the in-car video/audio computer module and the automobile; and
Figure 6 is a block diagram of a control circuit of the present invention.

### DETAILED DESCRIPTION OF PREFERRED EMBODIMENT

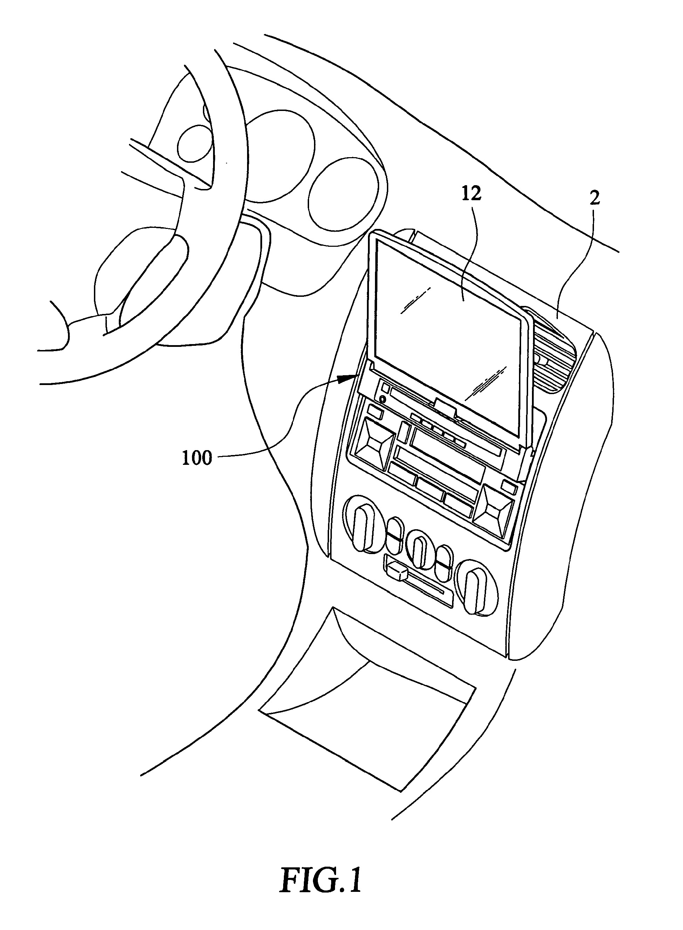

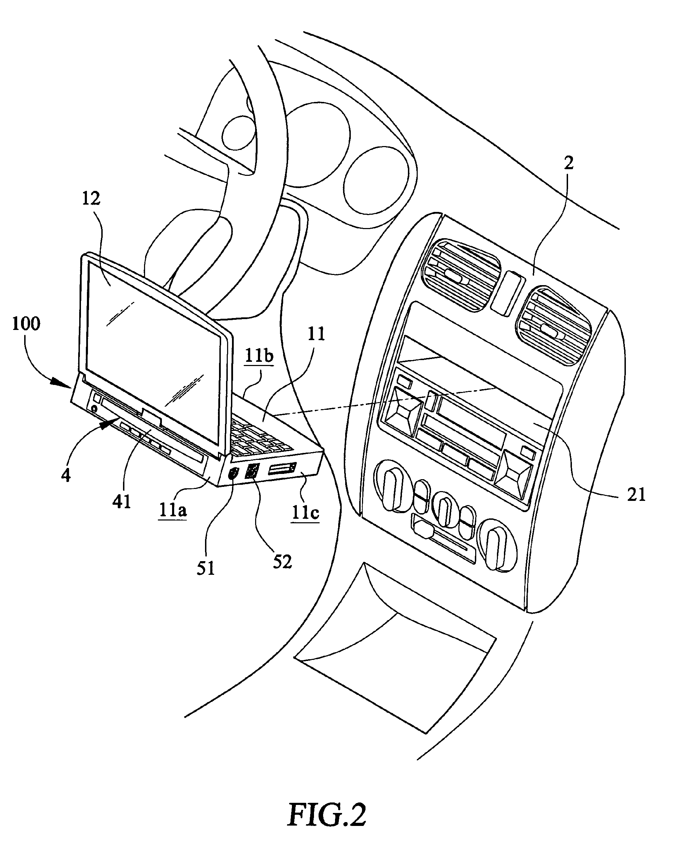

With reference to the drawings and in particular to Figures 1 and 2, an in-car video/audio computer module constructed in accordance with the present invention, generally designated with reference numeral 100, comprises a casing 11 having a front end surface 11a and a rear end surface 11b. The casing 11 is configured to allow the rear end surface 11b to fit into a receiving slot 21 defined in a front control section 2 of a car (not labeled), whereby the computer module 100 is stably retained in the slot 21 and electrically coupled to the front control section 2, serving as a built-in and optional component of the car.

When the computer module 100 is received in the slot 21 of the car control section 2, the front end surface 11a of the casing 11 is exposed toward interior of the car for the ready access of a car passenger.

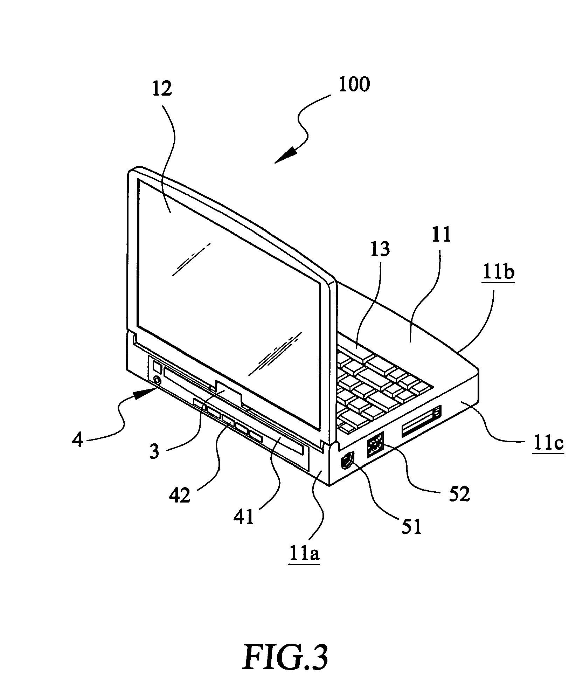

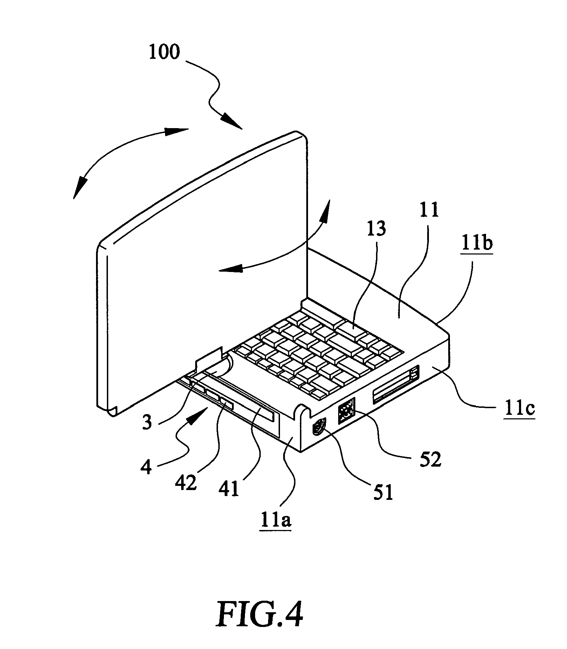

Also referring to Figures 3 and 4, the computer module 100 of the present invention comprises a touch-control type display screen 12 that is mounted to the casing 11 adjacent to the front end surface 11a. A pivotal joint 3 connects the screen 12 to the casing 11 and allows the screen 12 to make rotation with respect to the casing along at least two rotational axes. The pivotal joint 3 allows a user to orient the display screen 12 at any desired angles along the rotational axes.

Similar to regular computer devices, the computer module 100 is provided with a keyboard 13, which allows the user to key in commands and data.

The display screen 12 that is mounted to the front end surface 11 a of the casing 11 is located outside the slot 21 of the car control section 2 when the casing 11 is received in the slot 21. This allows for easy observation of the display screen 12 by the user.

The display screen 12 may be of regular touch-control panel, which receives data input through user's touch the screen 12. The touch-control screen is well known in the art and thus no further detail is needed herein.

The computer module 100 comprises a built-in video/audio device 4 having a medium access opening 41 formed in the front end surface 11a of the casing 11 to allow ready access (deposition and retrieval) of a storage medium, such as a video/audio optic disc, by the user. Control buttons 42 for the video/audio device 4 are formed on the front end surface 11a of the casing 11 adjacent to the medium access opening 41. The control buttons 42 allow the user to operate the video/audio device 4, as well as controlling the computer module 100.

The casing 11 has a lateral side surface 11c, connecting between the front and rear end surfaces 11a, 11b. Input/output ports of the computer module 100 are formed in the lateral side surface 11c, including for example external keyboard connection port 51 and a universal serial bus (USB) port 52. If desired, other connection can be formed in the lateral side surface 11c.

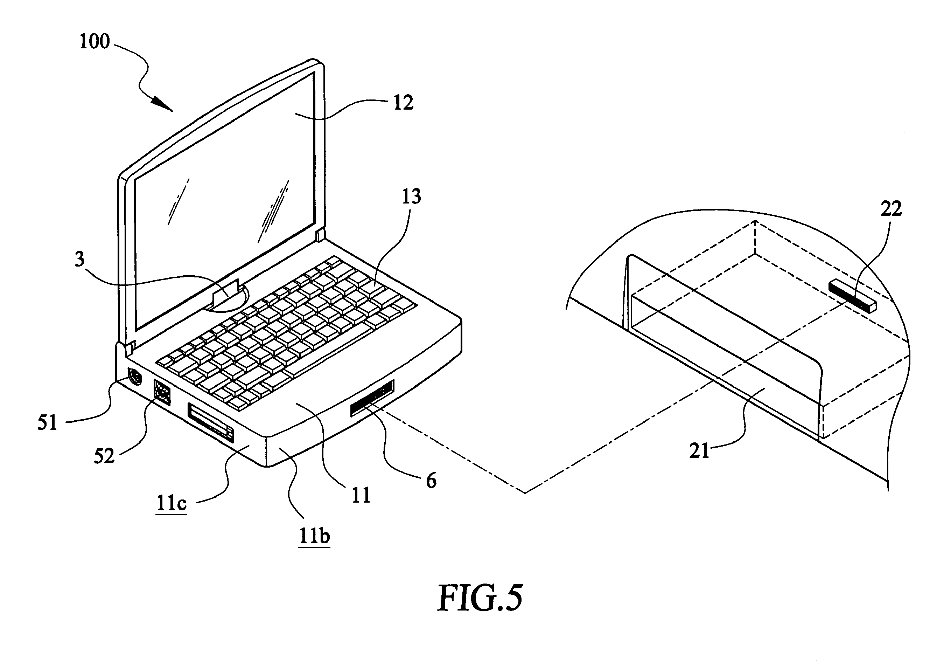

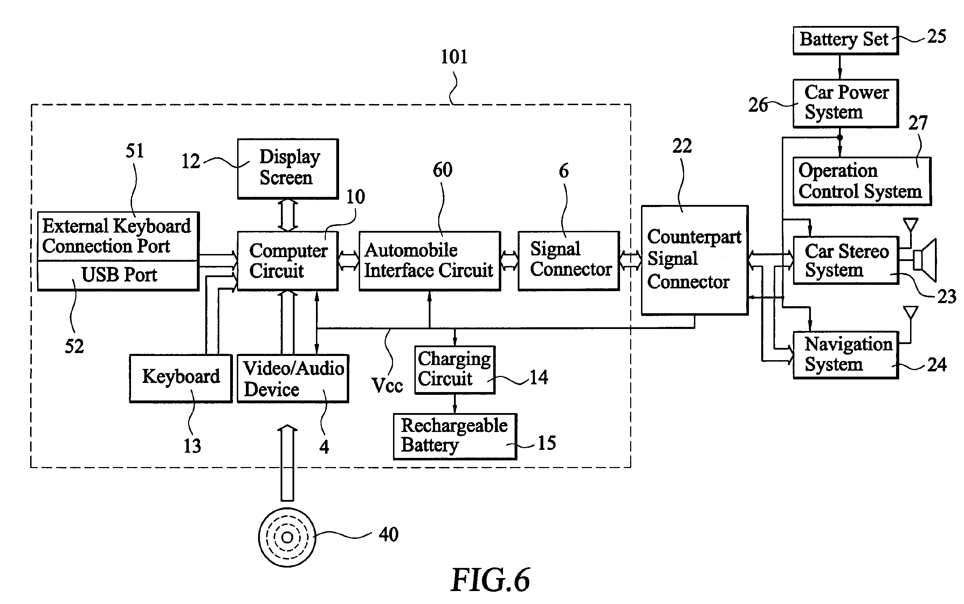

Also referring to Figure 5, a signal connector 6 is formed in the rear end surface 11b of the casing 11. Corresponding to and mateable with the signal connector 6 is a counterpart signal connector 22 formed inside the receiving slot 21 of the car control section 2 whereby when the computer module 100 is received in the receiving slot 21, the signal connectors 6 and 22 engage each other to establish electrical connection between the computer module 100 and the car. Thus, the computer module 100 is coupled to, for example the power system of the car (see reference numeral 25 of Figure 6), which supplies power to the computer module 100, and an in-car stereo system (see reference numeral 23 of Figure 6), which receives and broadcasts audio signals from the computer module 100, particularly the video/audio device 4 of the computer module 100.

A control circuit that couples the computer module 100 to a control circuit of the car is shown in block form in Figure 6. The control circuit, which is designated with reference numeral 101, comprises a computer circuit 10, which is comprised of a regular circuit of portable computer, including for example a central processing unit, buses, memories, data storages, communication interfaces, and input/output ports. The computer circuit 10 is coupled to the touch-control display screen 12, the keyboard 13, the video/audio device 4, the external keyboard connection port 51, and the USB port 52. The computer circuit 10 controls the operation of the video/audio device 4, which can receives and plays back information stored in a storage medium, such as a video/audio optic disc.

The control circuit 101 further comprises an automobile interface circuit 60, which is coupled to circuits of the car by the engagement between the signal connector 6 and the counterpart signal connector 22 of the receiving slot 21 of the car control section 2. The car circuits may include for example the car stereo system 23 and a satellite signal based car navigation system 24. The connection between the control circuit 101 and the car stereo system 23 and the navigation system 24 form an integrated circuit system for the car. The control circuit 101 includes a rechargeable battery 14 for supplying power energy to the electronic components of the control circuit 101, which may be charged by a charging circuit 14

The car power system 26 comprises a battery set 25 that supplies electrical power to an operation control system 27 of the car, such as in-car lighting system and direction signals, through the car power system 26. The power is also supplied to the car stereo system 23 and the navigation system 24.

As mentioned previously, the computer module 100 of the present invention is also powered by the car power system 26. The power is supplied from the car power system 26 through the connectors 6, 22 to the computer module 100 as a working voltage Vcc of the computer module 100.

The present invention provides a device that is ready to operate for play back of video/audio signal retrieved from a storage medium or form other sources, when the device, namely the computer module 100, is inserted into the receiving slot 21 and is thus coupled to the system of the car. The play-back of audio signal is effected through the car stereo system, which gives enhanced sound effect than regular computer can, while video image is displayed on the display screen 12 that faces the driver and front seat passenger of the car. Thus, the present invention can be integrated with the existing system of a car.

In addition, the operation of the satellite signal based car navigation system 24 can be enhanced by the computer module 100. For example, the computer module 100 can performs operation of addressing, signal recording, computation, and navigation. Alternatively, the navigation system can be built in the computer module 100, whereby the car, which may not have a navigation system, is additionally provided with satellite navigation features.

The coupling, either mechanical or electrical, between the computer module 100 and the receiving slot 21 of the car control section 2 is releasable. In other words, the user may remove the computer module 100 from the car control section 2 whenever the user wishes. The computer module 100 can serve as a stand-along computer device by simply rotating and thus properly orientating the display screen 12. Thus, the computer module 100 can be parts of a car circuit system or separated from the car circuit system to serve as a portable computer.

Although the present invention has been described with reference to the preferred embodiment thereof, it is apparent to those skilled in the art that a variety of modifications and changes may be made without departing from the scope of the present invention which is intended to be defined by the appended claims.

## Claims

1. An in-car video/audio computer module (100) adapted to be received in a receiving slot (21) defined in a car control section (2) of a car, **characterized in that** the computer module (100) comprises:
a casing (11) having a front end surface (11a) and an opposite rear end surface (11b), a computer circuit (10) being housed in the casing (11), the rear end surface (11b) being adapted to fit into the receiving slot (21) with the front end surface (11a) exposed;
a display screen (12) mounted to the casing (11) adjacent to the front end surface (11a) so as to be located outside the receiving slot (21) when the casing (11) is received in the receiving slot (21), the display screen (12) being electrically coupled to the computer circuit (10); and
a video/audio device (4) built in the casing (11) and electrically coupled to the computer circuit (10), the video/audio device (4) comprising a storage medium access opening (41) defined in the front end surface (11 a) of the casing (11) for selective deposition and retrieval of a storage medium.

2. The in-car video/audio computer module (100) as claimed in Claim 1, **characterized in that** the display screen (12) is mounted to the casing (11) by a rotatable joint (3) that allows the display screen (12) to rotate with respect to the casing (11) for adjustment of angular position of the display screen (12) with respect to a viewer.

3. The in-car video/audio computer module (100) as claimed in Claim 1, **characterized in that** the casing (11) further has a lateral side surface (11c) in which at least one input/output port (51, 52) is formed.

4. The in-car video/audio computer module (100) as claimed in Claim 1, **characterized in that** the casing (11) forms a signal connector (6) on the rear end surface (11b) thereof, the signal connector (6) being engageable with a counterpart connector (22) formed in the receiving slot (21) of the car control section (2) when the casing (11) is received in the receiving slot (21).

5. The in-car video/audio computer module (100) as claimed in Claim 4, **characterized in that** the computer circuit (10) is coupled to a stereo system (23) of the car by the engagement between the signal connector (6) and the counterpart connector (22).

6. The in-car video/audio computer module (100) as claimed in Claim 4, **characterized in that** the computer circuit (10) is coupled to a satellite navigation system (24) of the car by the engagement between the signal connector (6) and the counterpart connector (22).

7. The in-car video/audio computer module (100) as claimed in Claim 1 further comprising a satellite navigation system (24) built in the casing (11) and in electrical connection with the computer circuit (10).

8. The in-car video/audio computer module (100) as claimed in Claim 1, **characterized in that** the display screen (12) comprises a touch-control screen.

9. A transportation device comprising a video/audio computer module (100), the transportation device forming in a receiving slot (21) in which the video/audio computer module (100) is received and retained, **characterized in that** the video/audio computer module (100) comprises:
a casing (11) having a front end surface (11a) and an opposite rear end surface (11b), a computer circuit (10) being housed in the casing (11), the rear end surface (11b) being receivable in the receiving slot (21) with the front end surface (11 a) exposed;
a display screen (12) mounted to the casing (11) adjacent to the front end surface (11a) so as to be located outside the receiving slot (21) when the casing (11) is received in the receiving slot (21), the display screen (12) being electrically coupled to the computer circuit (10); and
a video/audio device (4) built in the casing (11) and electrically coupled to the computer circuit (10), the video/audio device (4) comprising a storage medium access opening (41) defined in the front end surface (11a) of the casing (11) for selective deposition and retrieval of a storage medium.

10. The transportation device as claimed in Claim 9, **characterized in that** the display screen (12) is mounted to the casing (11) by a rotatable joint (3) that allows the display screen (12) to rotate with respect to the casing (11) for adjustment of angular position of the display screen (12) with respect to a viewer.

11. The transportation device as claimed in Claim 9, **characterized in that** the casing (11) further has a lateral side surface (11c) in which at least one input/output port (51, 52) is formed.

12. The transportation device as claimed in Claim 9, **characterized in that** the casing (11) forms a signal connector (6) on the rear end surface (11b) thereof, the signal connector (6) being engageable with a counterpart connector (22) formed in the receiving slot (21) when the casing (11) is received in the receiving slot (21).

13. The transportation device as claimed in Claim 12, **characterized in that** the transportation device comprises a stereo system (23) in electrical connection with the counterpart connector (22) in the receiving slot (21) and where the computer circuit (10) is coupled to the stereo system (23) by the engagement between the signal connector (6) and the counterpart connector (22).

14. The transportation device as claimed in Claim 12, **characterized in that** the transportation device comprises a satellite navigation system (24) in electrical connection with the counterpart connector (22) in the receiving slot (21) and **characterized in that** the computer circuit (10) is coupled to the satellite navigation system (24) by the engagement between the signal connector (6) and the counterpart connector (22).

15. The transportation device as claimed in Claim 9, **characterized in that** the display screen (12) comprises a touch-control screen.
